# EUROPÄISCHE PATENTSCHRIFT

(11) **EP 0 858 362 B1**
(45) Veröffentlichungstag und Bekanntmachung des Hinweises auf die Patenterteilung: **12.06.2002**
(21) Anmeldenummer: 96934635.2
(22) Anmeldetag: 11.10.1996
(51) Int. Cl.: B01D 11/04

(54) **MEHRPHASEN-EXTRAKTOR**
MULTIPLE PHASE EXTRACTOR
EXTRACTEUR A PHASES MULTIPLES

(30) Priorität: 19.10.1995 RU 95117766 N; 19.10.1995 RU 95117767 N
(43) Veröffentlichungstag der Anmeldung: 19.08.1998
(73) Patentinhaber: BAYER AG, 51368 Leverkusen (DE)
(72) Erfinder: KOSTANIAN, Artak Eranosovich, Moskovskaya obl., 142701 (RU)
(86) Internationale Anmeldenummer: EP9604422
(87) Internationale Veröffentlichungsnummer: WO9714486

(56) Entgegenhaltungen:
- FR-A- 1 571 433
- US-A- 1 951 787
- US-A- 2 023 109
- US-A- 2 813 011
- US-A- 2 851 396
- US-A- 3 165 384
- US-A- 3 857 919
- US-A- 4 293 387

## Beschreibung

Die Erfindung geht aus von einem Mehrphasenextraktor mit mindestens zwei Kammern, die in ihrem oberen und unteren Teil durch Verbindungskanäle verbunden sind, die jede mit Dispergiervorrichtungen ausgestattet sind und Stutzen für die Zuführung und Abführung einer ersten, zweiten und ggf. dritten dispersen Phase besitzen.

Ein solcher Mehrphasenextraktor kann in chemischen, hydrometallurgischen, mikrobiologischen und anderen Industriezweigen zur Trennung, Extraktion, Konzentrierung und Reinigung von Stoffen angewendet werden.

Apparate zur Durchführung von Prozessen der dreiphasigen flüssigen Extraktion sind bekannt in Form eines Zweikammersystems, wobei die beiden Kammern im oberen Teil miteinander verbunden sind oder eine porose Trennwand besitzen. Die Kammern sind ausgefüllt mit einer kontinuierlichen Phase, durch welche zwei dispergierende Phasen, die nicht löslich in der kontinuierlichen Phase sind, in Form von Tropfen durchgeleitet werden. Hierbei erfolgt der Übergang von Stoffen aus einer dispergierten Phase (Raffinat-Phase) durch die kontinuierliche Phase (auch Flüssigmembranphase genannt) in die andere dispergierte Phase (Extrakt-Phase) (s z.B. Journal "Theoretische Grundlagen der chemischen Technologie" 1984, T 18; Nr. 6, S. 736- 738).

Diese Apparate sind hinsichtlich ihrer Leistungsfahigkeit und der Erweiterung auf vielstufige Prozesse verbesserungsbedürftig.

Vom technischen Standpunkt sowie vom erreichbaren Effekt her kommt der dreiphasige Extraktor, welcher aus einer ersten und zweiten. mit der kontinuierlichen Phase (Flüssig-Membran) gefüllten Kammer besteht, den bekannten Apparaten am nächsten. Die Kammern besitzen Vorrichtungen für die Dispergierung der jeweiligen Phase und sind miteinander durch Überläufe für die Zirkulation der kontinuierlichen Phase verbunden. Die Überläufe sind in Form von Rohren ausgefuhrt, welche den oberen und unteren Teil der Kammer jeweils miteinander verbinden. Der Extraktor ist mit Stutzen für die Zu- und Abführung der ersten und zweiten dispergierten Phase versehen. (Russische Patentanmeldung Nr. 94-015776/26 (015406) vom 27.04.94).

Die zu dispergierende Phase, welche die Ausgangslösung ist und das Lösungsmittel (Extrakt-Phase) werden jeweils in der entsprechenden Kammer mittels einer Dispergiervorrichtung in Tröpfchen zerteilt, die sich als Tropfenschwarm durch die kontinuierliche Phase bewegen. Auf Grund des Dichteunterschiedes der Emulsionen in der ersten und zweiten Kammer erfolgt eine Zirkulation der kontinuierlichen Phase durch die oberen und unteren Überläufe, so daß ein Übergang des extrahierten Stoffes aus einer Kammer in die andere und aus der ersten zu dispergierenden Phase in die zweite erfolgt.

Ein Nachteil des bekannten Dreiphasen-Extraktors liegt darin, daß durch die zirkulierende kontinuierliche Phase Tröpfchen der dispergierten Phase aus einer Kammer in die andere mitgerissen werden. Diese Erscheinung, die zu einer Verminderung der Effektivität des Apparates und zur Verschmutzung der Extrakt-Phase führt, verstärkt sich insbesondere mit der Erhöhung des Verhältnisses der Mengenströme von Raffinat-Phase und Extrakt-Phase infolge des Ansteigens der Triebkraft der Zirkulation (Unterschied der Dichten der Emulsionen in der ersten und zweiten Kammer).

Ein weiter Nachteil besteht darin, daß in diesem Extraktor keine kontinuierliche Mehrkomponenten-Extraktion durchgeführt werden kann; d. h. der Extraktor kann nicht für Prozesse eingesetzt werden, in denen die selektive Trennung von Gemischen mehrerer Komponenten gefordert wird (Gewinnung einzelner Komponenten aus einer Ausgangslösung)

Bei der Extraktion und Aufkonzentrierung von Stoffen aus verdünnten Lösungen, z. B. Metallen aus Abwässern, kann das Verhältnis der Ströme des Raffinates und Extraktes höher als 2 - 10 sein. Die Konstruktion des bekannten Extraktors erlaubt in solchen Fällen keine Steigerung der Effektivität.

Der Erfindung liegt die Aufgabe zugrunde, die Effektivität des Mehrphasen-Extraktors zu verbessern. Weiterhin besteht die Aufgabe der Erfindung darin, einen Mehrphasen-Extraktor zur Durchführung einer kontinuierlichen Mehrkomponenten-Extraktion zu entwickeln.

Diese Aufgabe wird, ausgehend von. dem eingangs beschriebenen Apparat, erfindungsgemäß dadurch gelöst, daß jede Kammer im Mehrphasen-Extraktor Separationszonen zur Verhinderung des Mitreißens von Tröpfchen aufweist, die im Bereich der Eingangsöffnungen der Verbindungskanäle gelegen sind.

Gemäß einer bevorzugten Ausführung ist die zweite Kammer in ihrem oberen und unteren Teil mit einer dritten Kammer verbunden ist.

Vorteilhaft sind die Kammern in einem Gehäuse untergebracht und durch eine gemeinsame Zwischenwand getrennt.

Eine Weiterentwicklung der Erfindung ist dadurch gekennzeichnet, daß unterhalb einer ersten Stufe mit den in ihrem oberen und unteren Teil verbundenen Kammern weitere hintereinander geschaltete Stufen mit untereinander verbundenen Kammern angeordnet sind, wobei die einzelnen Stufen über perforierte, von den dispersen Phasen durchströmte Böden (Siebböden) miteinander in Verbindung stehen.

Vorzugsweise sind bei dem Mehrphasenextraktor zur Förderung der kontinuierlichen Phase in den einzelnen Stufen Verbindungsrohre an den perforierten Böden vorgesehen und Stutzen am Gehäuse für die Zuführung und Abführung der kontinuierlichen Phase angebracht.

Die Ausführung mit Separationszonen bzw. Abscheideraumen, welche im Bereich der Eingangsöffnungen der Verbindungskanäle bzw. Überläufe angeordnet sind, verhindert das Mitreißen von Tröpfchen durch den zirkulierenden Strom der kontinuierlichen Phase aus einer Kammer in die andere. Dazu tragt auch die Anordnung der beiden Kammern in einem Gehäuse bei, das durch eine gemeinsame Trennwand unterteilt ist. Hierbei wird der Querschnitt der als Überläufe ausgebildeten Verbindungskanäle wesentlich erhöht und die Strömungsgeschwindigkeit der kontinuierlichen Phase am Übergang von einer Kammer in die andere verringert

Die Verbindung der zweiten mit der dritten Kammer schafft ein grundsatzlich neues Mehrkammersystem mit einer gemeinsamen zentralen. zweiten Kammer. Diese Konstruktion erlaubt zusammen mit den Stutzen für die Zugabe und die Abführung der dritten dispergierten Phase und den Dispergiervorrichtungen die Durchführung von kontinuierlichen Mehrkomponenten-Extraktionsverfahren.

Die Verbindung zwischen den Kammern an ihrem oberen und unteren Ende erlaubt die Durchführung verschiedener technologischer Varianten des Prozesses. Als Ausgangslösung kann z. B. die zweite zu dispergierende Phase verwendet werden. Die aus ihr abgetrennten Komponenten gehen dann über die kontinuierliche Phase in die erste und dritte dispergierte Phase über. Alternativ kann das Ausgangsgemisch in Form der kontinuierlichen Phase aufgegeben werden, wobei die verschiedenen Komponenten dieser kontinuierlichen Phase durch die verschiedenen dispergierten Phasen extrahiert werden.

Die zusätzliche Anordnung von Kammern analoger Konstruktion unterhalb der ersten und zweiten Kammer (Hintereinanderschaltung von mehreren Stufen) erlaubt die Durchführung von mehrstufigen Stofftrennungsprozessen im Mehrphasen-Extraktor. Die Ausführung des Extraktors mit Stutzen für die Zu- und Abführung der kontinuierlichen Phase und Verbindungsrohren für ihren Transport zwischen den Stufen schafft die Voraussetzungen für die Durchführung von Trennprozessen mittels der Flüssigmembranmethode sowie der Dreiphasen-Extraktion.

In Figur 1 - 3 sind schematisch drei mögliche Varianten des erfindungsgemäßen Dreiphasen-Extraktors und in Figur 4 - 6 weitere Ausführungsformen für einen Mehrphasen-Extraktor dargestellt.

In Fig. 1 ist ein einstufiger Extraktor für die Durchführung von Trennprozessen von Stoffen mit stationärer zirkulierender, kontinuierlicher Phase dargestellt, die als Flüssigmembran dient.

In Fig. 2 und 3 sind mehrstufige Dreiphasen-Extraktoren dargestellt, in welchen die Kammern in einem Gehäuse untergebracht sind.

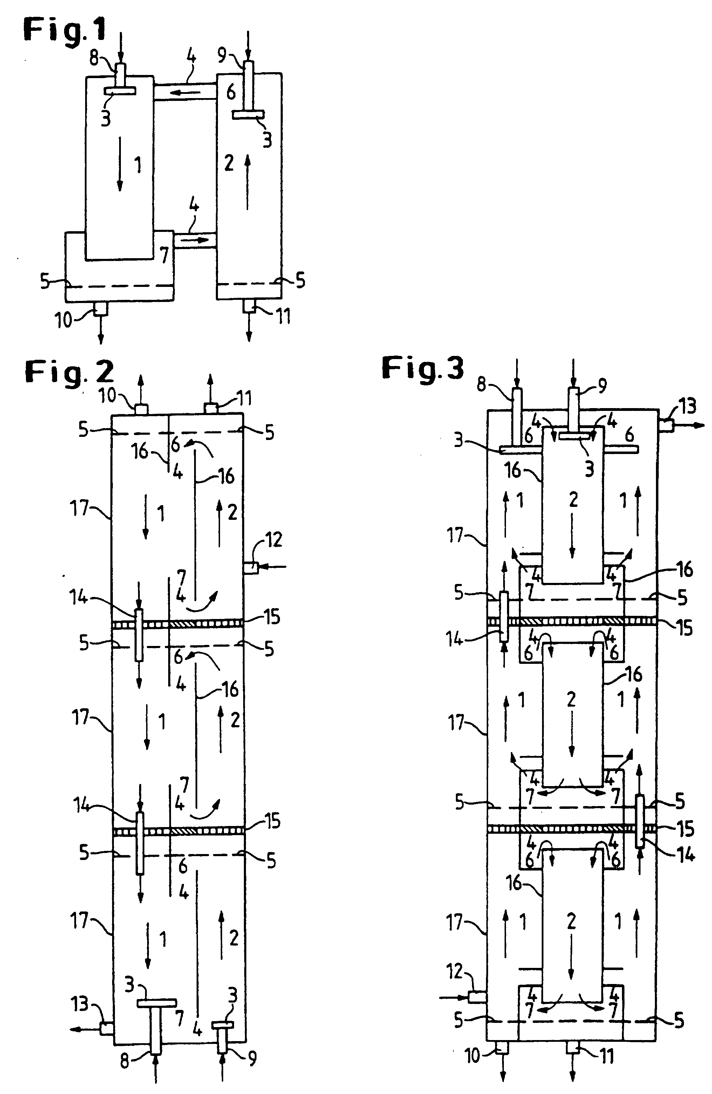

Im Extraktor nach Fig. 2 sind die Kammern in den Trennstufen durch eine gemeinsame Trennwand in Form von vertikalen Wänden 16 unterteilt. Im Extraktor nach Fig. 3 hat diese Trennwand die Form eines zentralen, konzentrischen Rohres 16. In diesem Fall ist die eine Kammer 1 in dem ringförmigen Außenraum und die andere Kammer 2 im zentralen Rohr 16 angeordnet, so daß der Extraktor nach Art eines zylindrischen Kolonnenapparats aufgebaut ist.

Der Dreiphasen-Extraktor besteht bei allen Ausführungen grundsätzlich aus der ersten (1) und der zweiten Kammer 2, die beide mit einer Dispergiervorrichtung 3 versehen sind. In ihrem oberen und unteren Teil sind die Kammern 1 und 2 durch Verbindungskanäle bzw. Überläufe 4 verbunden. Abhangig von der dispergierten Phase muß die Phasengrenze der kontaktierten Phasen oberhalb oder unterhalb der Verbindungen zwischen den Kammern 1 und 2 liegen. Die Kammern 1 und 2 des Dreiphasen-Extraktors weisen Separationszonen bzw. Abscheideraume 6 und 7 auf, welche an den Eingangsöffnungen der Verbindungskanäle 4 bzw. Überläufe angebracht sind. Der Extraktor ist mit den Stutzen 8 und 9 für die Zuführung und mit den Stutzen 10 und 11 für die Abführung der ersten und zweiten Dispersphase ausgestattet.

Der mehrstufige Extraktor gemäß Fig. 2 und 3 besteht aus einem System von hintereinander geschalteten weiteren Kammern 1 und 2, welche unterhalb der obersten ersten (1) und zweiten Kammer 2 angeordnet sind Ferner sind ein Stutzen 12 für die Zuführung und ein Stutzen 13 fur die Abführung der kontinuierlichen Phase und Verbindungsrohre 14 fur den Transport der kontinuierlichen Phase (von Stufe zu Stufe) zwischen den oberen und unteren Kammern vorgesehen. Die Kammern 1 und 2 von verschiedenen Stufen sind über die perforierten Böden 15 (Siebböden) miteinander verbunden, welche als Dispergiervorrichtung zwischen benachbarten Kammern dienen. Innerhalb einer Stufe sind die Kammern 1 und 2 durch die gemeinsame Trennwand 16 getrennt, die jeweils über einem unteren und unter einem oberen perforierten Boden 15 angeordnet ist.

Der Dreiphasen-Extaktor arbeitet nach folgendem Prinzip
Die 1. und 2. Kammer wird mit der kontinuierlichen Phase gefullt. In die Kammern wird über die Stutzen 8, 9 und die Dispergiervorrichtungen 3 die erste und zweite zu dispergierende Phase eingespeist. In Abhängigkeit der Dichten der zu kontaktierenden Flüssigkeiten bewegen sich die Tröpfchen der dispergierten Phase in den Kammern 1 und 2 nach oben oder unten und koaleszieren an der Phasengrenzfläche 5. Im mehrstufigen Apparat wiederholt sich der Vorgang der Dispergierung und Koaleszenz in jeder Stufe. Hierbei wird die Dispergierung der zu dispergierenden Phase in den Kammern der zweiten und folgenden Stufen (entsprechend der Bewegung der Phasenströme) durch die perforierten Böden 15 erzielt. Die beiden Dispersphasen werden mittels der Stutzen 10 und 11 aus dem Extraktor abgeführt.

Bei der Bewegung der Tropfenschwärme durch die Kammern 1 und 2 bilden sich Emulsionen mit unterschiedlichen Dichten. Infolgedessen entsteht eine aufsteigende und andererseits eine absteigende Bewegung der kontinuierlichen Phase. Daraus resultiert eine Zirkulation der kontinuierlichen Phase zwischen den Kammern 1 und 2 über die Separationszonen 6 und 7, welche an den Eingangsöffnungen der Verbindungen 4 angebracht sind

Beim Durchströmen der Separationszonen 6 und 7 in den Kammern 1 und 2 scheiden sich die von der kontinuierlichen Phase mitgerissenen kleinen Tröpfchen der dispergierten Phase ab. Auf diese Weise können Effektivitätsverluste des Trennprozesses auf Grund der Vermischung der Ströme der ersten und zweiten dispergierten Phase deutlich vermindert werden.

Das Mitreißen oder die Verschleppung von Tröpfchen der dispergierten Phase hängt von der Strömungsgeschwindigkeit der kontinuierlichen Phase in den Separationszonen 6 und 7 und in der Verbindung 4 ab. Aufgrund der Unterteilung der Kammer 1 und 2 durch die im Gehäuse angeordnete Trennwand 16 (Fig. 2 und 3) wird der Querschnitt der Verbindungen 4 wesentlich erhöht, so daß die Geschwindigkeit der kontinuierlichen Phase noch weiter verringert wird und damit eine noch bessere Separierung der Tröpfchen erreicht wird. Hierbei wird von einer einfachen und effektiven Realisierung der Separationszonen 6 und 7 in Form eines Flüssigkeitsüberlaufs (hydraulische Stauschicht) für die dispergierten Phasen Gebrauch gemacht.

Der Dreiphasen-Extraktor kann als Vorrichtung zur Trennung von Stoffen mittels flüssiger Membranen sowie als Apparat für die Mehrphasen-Extraktion verwendet werden.

Im ersten Fall wird die Ausgangslösung (Raffinat-Phase) in Form einer dispergierten Phase in die Kammern 1 und 2 aufgegeben. Der zu extrahierende Stoff wird durch die kontinuierliche Phase extrahiert. Der durch die zirizulierende kontinuierliche Phase (die hier als Flüssigmembran dient) extrahierte Stoff wird in die andere Kammer übertragen, wo die Reextraktion durch die zweite dispergierte Phase (Extrakt-Phase) erfolgt. Hierbei kann die zirkulierende kontinuierliche Phase stationär (Fig. 1) oder durchlaufend (Fig. 2, 3) sein. In dem zuletzt genannten Fall wird die Ausgangslösung, welche mindestens zwei Komponenten enthält, über den Stutzen 12 dem Extraktor zugeführt (Fig. 2, 3) und die zu extrahierenden Komponenten verschiedener Art werden durch die verschiedenartigen Dispersphasen in den Kammern 1 und 2 extrahiert. Im mehrstufigen Kolonnenapparat erfolgt eine gegenläufige Kontaktierung (Gegenstrom) der kontinuierlichen und dispergierten Phase. Die kontinuierliche Phase strömt dabei von Stufe zu Stufe über die Verbindungsrohre 14 zwischen den oberen und unteren Kammern und verläßt den Apparat durch den Stutzen 13.

Der beschriebene mehrphasige Extraktor ermöglicht die effektive Durchführung von Trennprozessen bei großen unterschiedlichen Phasen-Verhältnissen von Raffinat und Extrakt.

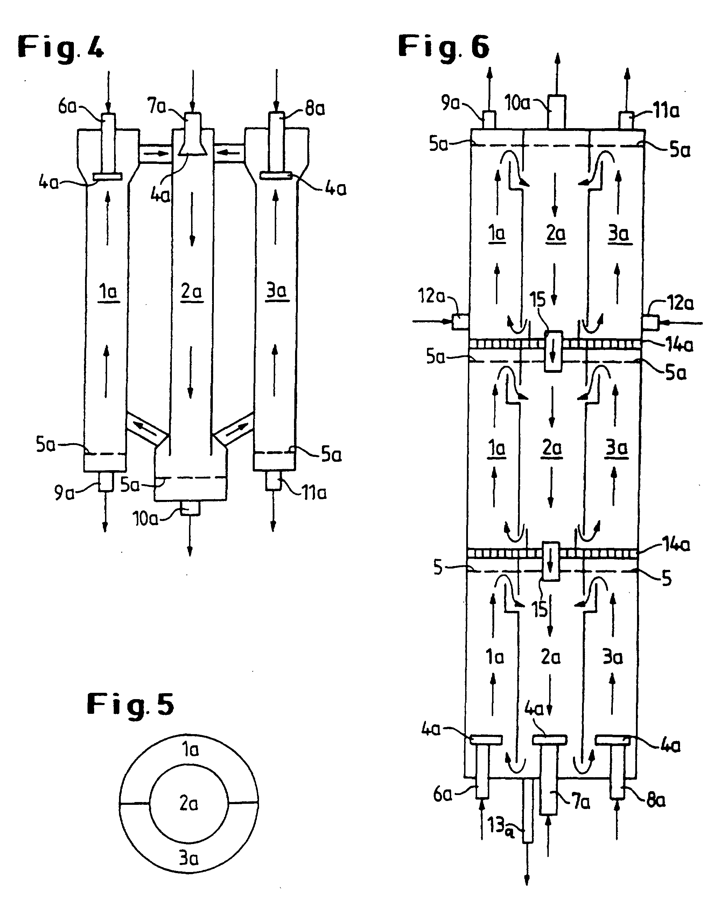

In Figur 4 ist ein einstufiger Extraktor für Mehrkomponentenextraktions-Prozesse dargestellt. Die Dichten aller dispergierten Phasen sollen hier größer sein als die Dichte der kontinuierlichen Phase. Die kontinuierliche Phase ist die Raffinat-Phase bzw. Feed-Phase; die dispergierten Phasen stellen die Extrakt-Phase dar Alle Kammern des Extraktors sind gemäß Fig. 5 und 6 in einer Kolonne angeordnet.

Im Schnittbild nach Fig. 6 ist eine Ausführung für eine Anordnung der Kammern in einer zylindrischen Kolonne dargestellt. Dabei befindet sich die erste (1a) und dritte Kammer 3a in einem ringförmigen Raum, während die zweite Kammer 2a in dem zentralen Rohr untergebracht ist.

Der Mehrphasenextraktor nach Fig. 4 - 6 besteht grundsätzlich aus der ersten (1a) zweiten (2a) dritten Kammer 3a, die jeweils mit einer Dispergiervorrichtung 4a ausgestattet sind. Die erste (1a) und dritte Kammer 3a sind in ihrem oberen und unteren Teil mit der zweiten Kammer 2a verbunden. Der Extraktor ist mit den Stutzen 6a, 7a 8a für die Zuführung und 9a, 10a, 11a für die Abführung der ersten, zweiten und dritten dispergierten Phase versehen.

Der mehrstufige Extraktor nach Fig. 5 ist mit zusätzlichen Kammern 1a, 2a und 3a versehen, welche unterhalb der drei Kammern der obersten Stufe angeordnet sind. Er ist ebenfalls mit Stutzen 12a für die Zuführung und 13a für die Abführung der kontinuierlichen Phase ausgestattet.

### Der Mehrphasenextraktor nach Fig. 4 - 6 arbeitet nach folgendem Prinzip:

Die erste (1a), zweite (2a) und dritte Kammer 3a werden mit der kontinuierlichen Phase gefüllt. Über die Stutzen 6a, 7a und 8a und die Dispergiervorrichtungen 4a werden die erste, zweite, und dritte zu dispergierende Phase eingespeist. In Abhängigkeit der Dichte der kontaktierenden Flüssigkeiten bewegen sich die Tropfen der dispergierten Phasen in den Kammern 1a, 2a und 3a nach oben oder unten und koaleszieren an der Phasengrenzfläche. Im Mehrstufenextraktor wiederholen sich die Prozesse des Dispergierens und der Koaleszenz in jeder Stufe. Hierbei wird die Dispergierung der zu dispergierenden Phase in den Kammern der zweiten und folgenden Stufe bei der Durchströmung der perforierten Böden 14a erreicht, welche die Kammern der aneinandergrenzenden Stufen trennen. Die erste, zweite und dritte Phase werden über die Stutzen 9a, 10a und 11a abgeführt.

Auf Grund des Dichtunterschiedes der Emulsionen in den Kammern 1a, 2a und 3a entsteht in der zweiten Kammer 2a eine fallende, in der ersten (1a) und dritten Kammer 3a eine aufsteigende Bewegung der kontinuierlichen Phase, was eine Zirkulation zwischen den Kammern über die oberen und unteren Verbindungen (s. Fig. 4 und 5) zur Folge hat. Die Realisierung einer entgegengesetzten Zirkulation ist ebenfalls möglich. In diesem Fall erfolgt die aufsteigende Bewegung in der Kammer 2a und die fallende Bewegung in den Kammern 1a und 3a

Auf Grund der Verbindung der zweiten Kammer 2a mit der dritten Kammer 3a im Mehrkammersystem werden mehrere zirkulierende, von der Kammer 2a ausgehende Umläufe der kontinuierlichen Phase erzeugt, in der auch die Vermischung der ankommenden Ströme erfolgt, was die Verteilung der Komponenten der Ausgangslösung zwischen den verschiedenen dispergierten Phasen ermöglicht

## Patentansprüche

1. Mehrphasenextraktor mit mindestens zwei Kammern (1, 1a, 2, 2a), die in ihrem oberen und untem Teil durch Verbindungskanäle (4) verbunden sind, die jede mit Dispergiervorrichtungen (3, 4a) ausgestattet sind und Stutzen (8, 9, 10, 11, 8a, 9a, 10, 11a) für die Zuführung und Abführung einer ersten und zweiten dispersen Phase besitzen, **dadurch gekennzeichnet, dass** jede Kammer (1 bzw. 2) Separationszonen (6 bzw. 7) zur Verhinderung des Mitreißens von Tröpfchen aufweist, die im Bereich der Eingangsöffnungen der Verbindungskanäle (4) gelegen sind.

2. Apparat nach Anspruch 1, **dadurch gekennzeichnet, daß** die zweite Kammer (2a) in ihrem oberen und unteren Teil mit einer neben der zweiten Kammer angeordneten, dritten Kammer (3a) verbunden ist.

3. Apparat nach Anspruch 1 und 2, **dadurch gekennzeichnet, daß** die Kammern in einem Gehäuse untergebracht und durch eine gemeinsame Zwischenwand (16) getrennt sind.

4. Apparat nach Anspruch 1 bis 3, **dadurch gekennzeichnet, daß** unterhalb einer ersten Stufe mit den untereinander verbundenen Kammern weitere hintereinander geschaltete Stufen mit untereinander verbundenen Kammern angeordnet sind, wobei die einzelnen Stufen über perforierte, von den dispersen Phasen durchströmte Böden (15, 14a) miteinander in Verbindung stehen.

5. Apparat nach Anspruch 4, **dadurch gekennzeichnet, daß** zur Förderung der kontinuierlichen Phase in den einzelnen Stufen Verbindungsrohre (14) an den perforierten Böden (15) angebracht sind und daß am Gehause Stutzen (12, 13) für die Zuführung und Abführung der kontinuierlichen Phase angeordnet sind.

## Claims

1. A multi-phase extractor having at least two chambers (1, 1a, 2, 2a) which are connected at their upper and lower parts by connection ducts (4), are each equipped with dispersing devices (3, 4a) and comprise ports (8, 9, 10, 11, 8a, 9a, 10, 11a) for the supply and removal of a first and second dispersed phase, **characterised in that** each chamber (1 or 2) comprises separation zones (6 and 7), for preventing droplets being entrained which are located in the area of the inlet openings of the connection ducts (4).

2. An apparatus according to claim 1, **characterised in that** the second chamber (2a) is connected at its upper and lower parts to a third chamber (3a) which is arranged next to the second chamber.

3. An apparatus according to claim 1 and claim 2, **characterised in that** the chambers are accommodated in a housing and separated by a common partition (16).

4. An apparatus according to claims 1 to 3, **characterised in that**, beneath a first stage with the interconnected chambers, there are arranged further stages connected in series and having interconnected chambers, wherein the individual stages are connected together by means of perforated plates (15, 14a) through which the dispersed phases flow.

5. An apparatus according to claim 4, **characterised in that** connecting pipes (14) are attached to the perforated plates (15) to convey the continuous phase between the individual stages, and **in that** ports (12, 13) are arranged on the housing for the supply and removal of the continuous phase.

## Revendications

1. Extracteur à plusieurs phases à au moins deux chambres (1, 1a, 2, 2a) reliées dans leur partie supérieure et leur partie inférieure par des canaux de liaison (4), qui sont équipées chacune de dispositifs disperseurs (3, 4a) et de tubulures (8, 9, 10, 11, 8a, 9a, 10, 11a) pour l'amenée et l'évacuation d'une première et d'une deuxième phases dispersées, **caractérisé en ce que** chacune des chambres (1 et 2) comporte des zones de séparation (6 et 7 respectivement) évitant l'entraînement de gouttelettes et qui sont placées dans la région des orifices d'entrée des canaux de liaison (4).

2. Appareil selon la revendication 1, **caractérisé en ce que** la deuxième chambre (2a) est reliée dans sa partie supérieure et dans sa partie inférieure avec une troisième chambre voisine (3a).

3. Appareil selon les revendications 1 et 2, **caractérisé en ce que** les chambres sont disposées dans un logement et séparées par une paroi intermédiaire commune (16).

4. Appareil selon les revendications 1 à 3, **caractérisé en ce que**, au-dessous d'un premier étage comportant les chambres reliées entre elles, on a disposé d'autres étages en série à chambres reliées entre elles, les divers étages étant reliés entre eux par des plateaux perforés (15, 14a) traversés par les phases dispersées.

5. Appareil selon la revendication 4, **caractérisé en ce que**, pour le transport de la phase continue dans les divers étages, on a disposé des conduits de liaison (14) sur les plateaux perforés (15) et on a équipé le logement de tubulures (12, 13) pour l'amenée et l'évacuation de la phase continue.
